# EUROPEAN PATENT SPECIFICATION

(11) **EP 3 977 269 B1**
(45) Date of publication and mention of the grant of the patent: **07.06.2023**
(21) Application number: 20727226.1
(22) Date of filing: 18.05.2020
(51) Int. Cl.: H04L 67/00, H04L 67/568, G06F 8/65, H04L 67/59, H04W 4/50, H04W 4/80

(54) **ENABLING UPGRADING FIRMWARE OF A TARGET DEVICE**
ERMÖGLICHUNG DER AKTUALISIERUNG DER FIRMWARE EINER ZIELVORRICHTUNG
ACTIVATION DE LA MISE À NIVEAU D'UN MICROLOGICIEL D'UN DISPOSITIF CIBLE

(30) Priority: 24.05.2019 SE 1950618
(43) Date of publication of application: 06.04.2022
(73) Proprietor: ASSA ABLOY AB, 107 23 Stockholm (SE)
(72) Inventor: BLIDING, Olle, 302 39 Halmstad (SE)
(74) Representative: Kransell & Wennborg KB
(86) International application number: PCT/EP2020/063817
(87) International publication number: WO 2020/239499

(56) References cited:
- US-A1- 2015 286 475
- US-A1- 2016 013 934

## Description

### TECHNICAL FIELD

The present disclosure relates to the field of firmware and in particular to upgrading firmware of a target device.

### BACKGROUND

Many types of devices rely on stable and functional firmware to function correctly. These devices are called target devices herein. Target devices can be connected devices, in which case firmware updates can be achieved by transferring a new firmware version from a firmware upgrade server to the target device.

However, when target devices are not network connected, firmware upgrades are more cumbersome. It is known to use a specific upgrade device, where a new firmware version is transferred to the target device and the firmware is applied to the target device.

Moreover, consider a case where there is a large number of target devices for which firmware needs to be upgraded. Using an upgrade device to upgrade the firmware in many cases takes 10 - 20 minutes for each target device. With a large number of target devices, such a task becomes an unreasonably large burden. Moreover, when the firmware upgrade occurs, the target device is prevented from performing its regular function. In one example, there can be target devices in the form of electronic locks which are used for home care access. Typically, a group of only a handful of people in a home care company has the task of keeping the technical environment functioning and up-to-date. A single home care company can be responsible for thousands of such electronic locks, whereby there is a substantial burden every time a new firmware version needs to be applied.

US 2016/013934 A1 discloses vehicle software update verification.

Ideally, the firmware upgrade should be provided without deliberate operator involvement. Moreover, the upgrade should keep impact on regular communication low.

### SUMMARY

One object is to improve how firmware is provided to target devices.

According to a first aspect, it is provided a method for enabling upgrading firmware of a target device. The method is performed in a portable updater and comprises the steps of: downloading a plurality of firmware sections from a server, the firmware sections collectively making up a complete firmware for deployment on the target device; determining that a connection with the target device is established over a short-range wireless link; determining a firmware section to transfer to the target device; and transferring the determined firmware section to the target device over the short-range wireless link The steps of determining a firmware section and transferring may be repeated until a predetermined number of firmware sections, being a strict subset of all firmware sections, have been transferred.

The method may further comprise the step of tearing down the connection with the target device after the strict subset of all firmware sections have been transferred.

The connection with the target device may be limited to transfer only the strict subset of all firmware sections.

The method may further comprise the step, prior to the step of downloading, of transmitting an identifier of the target device to the server.

The step of determining a firmware section to transfer may be based on a section indicator received from the target device over the short-range wireless link.

The section indicator may specify a firmware section to transfer.

The section indicator may specify a firmware version.

The portable updater may be a smartphone.

The short-range wireless link may be based on Bluetooth or Bluetooth Low Energy.

The target device may be an electronic lock.

According to a second aspect, it is provided a portable updater for enabling upgrading firmware of a target device. The portable updater comprises: a processor; and a memory storing instructions that, when executed by the processor, cause the portable updater to: download a plurality of firmware sections from a server, the firmware sections collectively making up a complete firmware for deployment on the target device; determine that a connection with the target device is established over a short-range wireless link; determine a firmware section to transfer to the target device; transfer the determined firmware section to the target device over the short-range wireless link; and repeat the instructions to determine a firmware section and transfer until a predetermined number of firmware sections, being a strict subset of all firmware sections, have been transferred.

The portable updater may further comprise instructions that, when executed by the processor, cause the portable updater to tear down the connection with the target device after the strict subset of all firmware sections have been transferred.

The connection with the target device may be limited to transfer only the strict subset of all firmware sections.

The portable updater may be a smartphone.

According to a third aspect, it is provided a computer program for enabling upgrading firmware of a target device. The computer program comprises computer program code which, when run on a portable updater causes the portable updater to: download a plurality of firmware sections from a server, the firmware sections collectively making up a complete firmware for deployment on the target device; determine that a connection with the target device is established over a short-range wireless link; determine a firmware section to transfer to the target device; transfer the determined firmware section to the target device over the short-range wireless link; and repeat the computer program code to determine a firmware section and transfer until a predetermined number of firmware sections, being a strict subset of all firmware sections, have been transferred.

According to a fourth aspect, it is provided a computer program product comprising a computer program according to the third aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2 is a schematic diagram illustrating the firmware sections;
Fig 3 is a flow chart for enabling upgrading firmware of a target device;
Fig 4 is a sequence diagram illustrating communication between different entities for upgrading firmware of a target device;
Fig 5 is a schematic diagram illustrating components of the portable updater of Fig 1; and
Fig 6 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

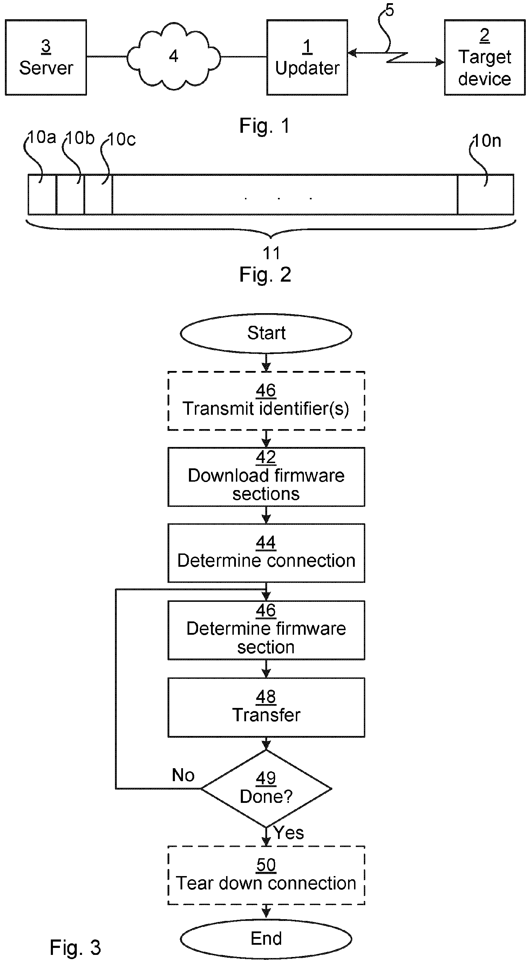

Fig 1 is a schematic diagram illustrating an environment in which embodiments presented herein can be applied. A target device 2 is an electronic device with a specific purpose. For instance, the target device 2 can be an electronic lock, a communication bridge device, personal emergency notification device, etc. In one embodiment, the target device 2 is not persistently connected to a communication network.

A portable updater 1 is configured to communicate with the target device 2 over a short-range wireless link 5. The short-range wireless link 5 can be based on any suitable current or future communication protocol for local wireless communication, e.g. Bluetooth and/or Bluetooth Low Energy (BLE).

The portable updater 1 is further configured to communicate with a server 3 over a communication network 4. The communication network 4 can e.g. be based on the Internet, and/or a cellular communication network. The portable updater 1 can be implemented as a smartphone, i.e. a multi-purpose mobile phone with capability of installing user-selected software applications, also known as apps. Alternatively, the updater is an access card, e.g. based on RFID (Radio Frequency Identification).

As explained in more detail below, the portable updater 1 is used to update firmware of the target device 2. Specifically, the firmware is not updated in a single operation; instead the firmware is divided in firmware sections, and is progressively transferred to the target device 2. The portable updater 1 can also be used to communicate with the target device 2 for its intended purpose, e.g. to unlock the target device 2 when this is an electronic lock.

Fig 2 is a schematic diagram illustrating the firmware sections 10a-n. A complete firmware 11 is divided in firmware sections 10a-n. The number of sections can vary in different implementations and can be selected based on the size of the complete firmware 11. Each firmware section 10a-n is a significant amount of data, e.g. at least one kilobyte or even at least one megabyte. In any case, each firmware section is greater than a single data packet, a single byte or a single bit. Hence, the firmware section is greater than what can be transferred in a single data packet between the portable updater and the target device. This simplifies the tracking of what firmware sections have been transferred and what firmware sections need to be transferred.

In order to upgrade the firmware in a target device 2, the complete firmware, i.e. all firmware sections 10a-n, need to be transferred to the target device. The complete firmware 11 is a specified version of complete firmware which can be applied to a target device. Different models of target devices can (but might not necessarily need to) have different types of firmware. The server can determine the firmware (including its version) to be applied for a particular target device, e.g. based on a serial number of the target device or a model number of the target device.

Fig 3 is a flow chart for enabling upgrading firmware of a target device. The method is performed in a portable updater, such as the portable updater shown in Fig 1 and described above. The portable updater can be a smartphone. The target device can be an electronic lock.

In an optional *transmit identifier(s)* step 40, the portable updater transmits an identifier (e.g. a serial number) of the target device to the server. In one embodiment, the updater device transmits a list of identifiers of target devices with which the portable device has interacted. When performed, this step is performed prior to step 42.

In a *download firmware sections* step 42, the portable updater downloads a plurality of firmware sections from a server. As explained above, the firmware sections collectively make up a complete firmware for deployment on the target device. When step 40 is performed, the complete firmware version to download is determined by the server, and communicated to the portable updater. The server then keeps track of what firmware version is applicable to what target device, using the identifier of the target device. It is to be noted that in some instances, the firmware may not need to be upgraded, in which case the method ends prior to performing step 42.

In a *determine connection* step 44, the portable updater determines that a connection with the target device is established over a short-range wireless link. Optionally, this step comprises establishing the connection with the target device over the short-range wireless link. The short-range wireless link can e.g. be based on Bluetooth or Bluetooth Low Energy or any other suitable short-range wireless link. The connection can be established also for another purpose, e.g. to control the target device in accordance with its specified purpose, e.g. to unlock the target device 2 when the target device is an electronic lock. As part of this step, the portable updater can inform the target device of the firmware version it has available for the target device, based on the identity of the target device.

In a *determine firmware section* step 46, the portable updater determines a firmware section to transfer to the target device. The firmware section to transfer can be determined based on a section indicator received from the target device over the short-range wireless link. This implements a pull-based transfer of firmware to the target device, i.e. the target device, in effect, requests firmware sections to be transferred, based on the communication from the updater device in step 44. The target device is then in control of what firmware section to transfer. For instance, if firmware sections 0 to n of a particular version had been transferred previously, the target device may decide to request firmware section *n* + 1. On the other hand, if there is a new firmware version available (communicated in step 44), the target device could decide to request firmware section 0 of that firmware version. It is to be noted that the firmware sections do not need to be requested sequentially. This pull-based transfer gives the target device control of the progression of transfer or firmware sections, which enables different portable updaters to supply different firmware sections (over time) of the same firmware. The section indicator can specify a specific firmware section to transfer. Optionally, the section indicator also specifies a firmware version, either by specifying the current version in the target device or by specifying a version number to update to.

In a *transfer* step 48, the portable updater transfers the determined firmware section to the target device over the short-range wireless link. Optionally, the portable updater transmits a status message to the server, to report the result of the transfer of the determined firmware section to a specific target device. In this way, the server knows when a certain firmware section has been successfully transferred to the target device, and can determine when all firmware sections of a complete firmware have been transferred.

In a conditional *done* step 49, it is determined whether a predetermined number (also denoted transfer number) of firmware sections, being a strict subset of all firmware sections, have been transferred. It this is not true, the method returns to the determine firmware section step 46. Otherwise, the method ends for this session, optionally via a tear down connection step 50.

In the optional *tear down connection* step 50, the portable updater tears down the connection with the target device, which then occurs after the strict subset of all firmware sections have been transferred. This step can be performed when it is confirmed that other data (e.g. access control data) has been appropriately communicated with the target device.

The connection (i.e. the communication session) with the target device can thus be limited to transfer only the strict subset of all firmware sections. While no more firmware sections are transferred over the connection, other data (e.g. access control data) can be transferred.

In other words, after the transfer number of firmware sections are transferred, no more firmware sections are transferred in this session, even if the target device still misses firmware sections that are available in the updater. It is to be noted that the transfer number is deliberately less than the total number of sections, to split up the transfer of sections in multiple sessions, to thereby reduce the time that is used for each transfer session. Hence, the bandwidth used in each session for transferring firmware sections is limited, to reduce negative effects on other communication with the target device. After a number of connections, potentially from different updaters, sufficient number of firmware sections will have been transferred to make up the entire firmware, while still not occupying too excessive bandwidth which would affect other communication.

The transfer number of firmware sections can be configured to control how aggressive the transfer of sections should be. If the transfer number is relatively high, the firmware will be transferred quicker (fewer transfer sessions), at the cost of slightly more disturbance to other communication. On the other hand, if the transfer number is relatively low, the firmware transfer will take a longer time (more transfer sessions), but the disturbance to other communication is reduced.

In one embodiment, the updater is configured to always transfer at least a first number of sections, when a connection is established with the target device. Alternatively or additionally, the updater is configured to always transfer at least a second number of sections when a disconnect occurs (or is triggered to occur) with the target device. In this case, the transfer occurs prior to the actual disconnection. The first number and the second number can differ from each other or be the same.

Optionally, transfer only occurs if a backoff duration has passed since the last disconnect. This prevents the transfer of firmware sections from occupying too much bandwidth, which could otherwise disrupt regular communication to the target device, with the updater or with other devices.

The parameters of transfer number, the first number, the second number and the backoff duration can be controlled centrally (from the server) to balance how quickly the firmware sections should be transferred to the target device. In one embodiment, one or more of the parameters are reconfigured over time to more aggressively transfer firmware sections if the firmware has not been transferred after a certain period, e.g. a certain number of days or months, to a specific target device. Optionally, the parameters are set progressively more aggressive over time to ensure the firmware is eventually transferred and applied.

Steps 44, 46 and 48 are performed each time an updater device establishes contact with a target device. In this way, it is not necessary that the complete firmware is transferred to target device in one communication session when the updater is in contact with the target device. Instead, one (or a few) firmware sections can be transferred each time.

Furthermore, the transfer of firmware sections to a target device can occur from different portable updaters. As long as the firmware sections are consistently defined and the firmware sections concern the same version of the complete firmware, there is nothing preventing different portable updaters transferring different firmware sections to the target device.

This flexibility in use of multiple updaters is of great benefit in many situations. For instance, consider the case of home care where the target device is an electronic lock. Any caregiver visiting the caretaker can transfer one or more sections during a visit, whereby eventually all sections will be transferred, even when caregivers may vary over time. Furthermore, there may be multiple caregivers during a single visit, in which case both caregivers may need to interact with the electronic lock. In such a case, the sections should be small enough to not disturb regular communication between updater (e.g. smartphone) and the target device.

Hence, for this and other embodiments, each section can have a maximum size, which can be determined based on expected transfer speed and/or type of target device. In one embodiment, the maximum size of each section also depends on the updater. For instance, the memory available for firmware sections may be limited in the updater, particularly if the updater is an access card (e.g. RFID).

There is no need for a deliberate user action for the transfer of firmware sections to commence from a portable updater device. Hence, any one of several users accessing the target device with an updater device lets its updater device act as a carrier for firmware sections. This automates the process of updating the firmware, simplifying the transfer of firmware sections. In this way, the firmware update can be applied using regular use and does not need e.g. maintenance personnel to apply the upgrade of firmware. This relieves the maintenance personnel from the time-consuming task of visiting each target device to upgrade firmware. As explained above, referring to the example of a home care situation, a single home care company can be responsible for the operation of thousands of such target devices. Each such upgrade traditionally takes 10 - 20 minutes of dedicated time. This deliberate update is completely eliminated by using embodiments presented herein.

Once all firmware sections of a complete firmware have been transferred to the target device, the target device reboots and applies the firmware upgrade e.g. using a bootloader. In this way, the target device is in full control of when it is ready to apply the upgrade, which minimises the risk of any transfer issues affecting stability of the target device during the firmware upgrade. The portable upgrader can then receive a success message from the target device, indicating that the target device has successfully applied a complete firmware. Once the success message has been received, the portable updater can send a corresponding success message to the server, allowing the server to keep track of currently applied firmware at the target device.

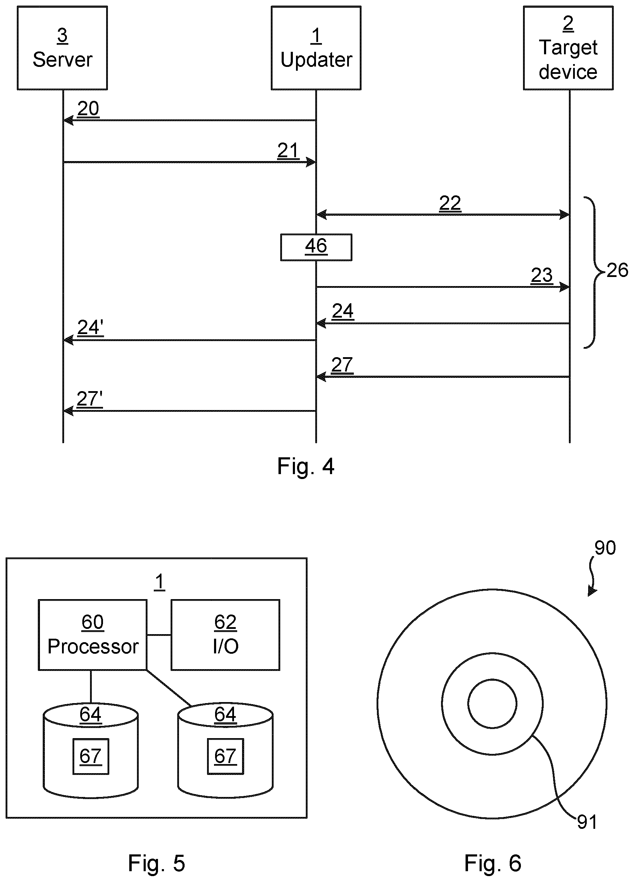

Fig 4 is a sequence diagram illustrating communication between different entities for upgrading firmware of a target device. The sequence diagram corresponds to the method of Fig 3, but better illustrates interaction between different entities.

First, the portable updater 1 transmits identifier(s) 20 of target device(s) it has interacted with to the server. This corresponds to step 40.

Based on the identifier(s) 20, the server 3 determines which firmware sections 21 that the updater should store to allow the firmware upgrade of the target device, and the updater downloads these firmware sections 21. This corresponds to step 42.

A connection 22 between the portable updater 1 and the target device 2 is established, corresponding to step 44. The portable updater 1 then determines 46 which firmware section to transfer and transfers the determined firmware section 23, corresponding to step 48.

The target device can optionally indicate 24 to the updater when the transfer is complete, after which the portable updater 1 can send a corresponding indication 24' (including an identifier of the target device 2 and an identifier of the transferred firmware section) to the server 3, indicating the transfer of that particular firmware section is complete. This allows the server 3 to keep track of what firmware sections have been transferred to each individual target device. In this embodiment, both the target device 2 and the server 3 has this information.

Sequence steps 22, 46, 23, and optional sequence steps 24, 24' are repeated 26 by one or more portable updaters 1 until all firmware sections of a complete firmware have been transferred to a particular target device 2. The target device 2 applies the complete firmware and sends a success message 27, when the complete firmware has been successfully applied, to the portable updater 1. The portable updater 1 then transmits a corresponding success message 27' to the server, allowing the server to keep track of currently applied firmware at the target device 2.

Fig 5 is a schematic diagram illustrating components of the portable updater 1 of Fig 1. A processor 60 is provided using any combination of one or more of a suitable central processing unit (CPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 3 above.

The memory 64 can be any combination of random-access memory (RAM) and/or read-only memory (ROM). The memory 64 also comprises persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The portable updater 1 further comprises an I/O interface 62 for communicating with external and/or internal entities. Optionally, the I/O interface 62 also includes a user interface.

A transceiver 61 comprises suitable analogue and digital components to allow signal transmission and signal reception with a wireless device using one or more antennas 63.

Other components of the portable updater 1 are omitted in order not to obscure the concepts presented herein.

Fig 6 shows one example of a computer program product 90 comprising computer readable means. On this computer readable means, a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 64 of Fig 5. While the computer program 91 is here schematically shown as a track on the depicted optical disk, the computer program can be stored in any way which is suitable for the computer program product, such as a removable solid-state memory, e.g. a Universal Serial Bus (USB) drive.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting.

## Claims

1. A method for enabling upgrading firmware of a target device (2), the method being performed in a portable updater (1) and comprising the steps of:
downloading (42) a plurality of firmware sections (10a-h) from a server (3), the firmware sections (10a-n) collectively making up a complete firmware (11) for deployment on the target device (2);
determining (44) that a connection with the target device (2) is established over a short-range wireless link;
determining (46) a firmware section to transfer to the target device (2); and
transferring (48) the determined firmware section to the target device (2) over the short-range wireless link;
**characterised in that** the steps of determining (46) a firmware section and transferring (48) are repeated until a predetermined number of firmware sections, being a strict subset of all firmware sections, have been transferred;
wherein the method further comprises tearing down the connection with the target device after the strict subset of all firmware sections have been transferred.

2. The method according to claim 1, wherein the connection with the target device (2) is limited to transfer only the strict subset of all firmware sections.

3. The method according to any one of the preceding claims, further comprising the step, prior to the step of downloading, of transmitting (40) an identifier of the target device to the server.

4. The method according to any one of the preceding claims, wherein the step of determining (46) a firmware section to transfer is based on a section indicator received from the target device (2) over the short-range wireless link.

5. The method according to claim 4, wherein the section indicator specifies a firmware section to transfer.

6. The method according to claim 5, wherein the section indicator specifies a firmware version.

7. The method according to any one of the preceding claims, wherein the portable updater (1) is a smartphone.

8. The method according to any one of the preceding claims, wherein the short-range wireless link is based on Bluetooth or Bluetooth Low Energy.

9. The method according to any one of the preceding claims, wherein the target device is an electronic lock.

10. A portable updater (1) for enabling upgrading firmware of a target device (2), the portable updater (2) comprising:
a processor (60); and
a memory (64) storing instructions (67) that, when executed by the processor, cause the portable updater (1) to:
download a plurality of firmware sections (10a-h) from a server (3), the firmware sections (10a-n) collectively making up a complete firmware (11) for deployment on the target device (2);
determine that a connection with the target device (2) is established over a short-range wireless link;
determine a firmware section to transfer to the target device (2);
transfer the determined firmware section to the target device (2) over the short-range wireless link; and
**characterised in that** the portable updater further comprises instructions (67) that, when executed by the processor, cause the portable updater (1) to repeat the instructions to determine a firmware section and transfer until a predetermined number of firmware sections, being a strict subset of all firmware sections, have been transferred
wherein the portable updater further comprises instructions (67) that, when executed by the processor, cause the portable updater (1) to tear down the connection with the target device after the strict subset of all firmware sections have been transferred.

11. The portable updater (1) according to claim 10, wherein the connection with the target device (2) is limited to transfer only the strict subset of all firmware sections.

12. The portable updater (1) according to any one of claims 10 to 11, wherein the portable updater (1) is a smartphone.

13. A computer program (67, 91) for enabling upgrading firmware of a target device (2), the computer program comprising computer program code which, when run on a portable updater (1) causes the portable updater (1) to:
download a plurality of firmware sections (10a-h) from a server (3), the firmware sections (10a-n) collectively making up a complete firmware (11) for deployment on the target device (2);
determine that a connection with the target device (2) is established over a short-range wireless link;
determine a firmware section to transfer to the target device (2); and
transfer the determined firmware section to the target device (2) over the short-range wireless link;
**characterised in that** the computer program further comprises computer program code which, when run on a portable updater (1) causes the portable updater (1) to repeat the computer program code to determine a firmware section and transfer until a predetermined number of firmware sections, being a strict subset of all firmware sections, have been transferred; and
wherein the computer program further comprises computer program code which, when run on a portable updater (1) causes the portable updater (1) to tear down the connection with the target device after the strict subset of all firmware sections have been transferred.

14. A computer program product (64, 90) comprising a computer program according to claim 13 and a computer readable means on which the computer program is stored.

## Patentansprüche

1. Verfahren zum Ermöglichen des Aktualisierens einer Firmware einer Zielvorrichtung (2), wobei das Verfahren in einem tragbaren Aktualisierer (1) durchgeführt wird und die folgenden Schritte umfasst:
Herunterladen (42) einer Vielzahl von Firmwareabschnitten (10a-h) von einem Server (3), wobei die Firmwareabschnitte (10a-n) zusammen eine vollständige Firmware (11) zum Einsatz auf der Zielvorrichtung (2) darstellen;
Bestimmen (44), dass eine Verbindung mit der Zielvorrichtung (2) über einen drahtlosen Kurzbereichslink aufgebaut ist;
Bestimmen (46) eines Firmwareabschnitts zum Übertragen zur Zielvorrichtung (2) und
Übertragen (48) des bestimmten Firmwareabschnitts über den drahtlosen Kurzbereichslink zur Zielvorrichtung (2);
**dadurch gekennzeichnet, dass** die Schritte des Bestimmens (46) eines Firmwareabschnitts und des Übertragens (48) wiederholt werden, bis eine vorbestimmte Anzahl von Firmwareabschnitten, bei denen es sich um einen strikten Untersatz von allen Firmwareabschnitten handelt, übertragen wurden;
wobei das Verfahren ferner das Trennen der Verbindung mit der Zielvorrichtung umfasst, nachdem der strikte Untersatz von allen Firmwareabschnitten übertragen wurden.

2. Verfahren nach Anspruch 1, wobei die Verbindung mit der Zielvorrichtung (2) auf das Übertragen nur des strikten Untersatzes von allen Firmwareabschnitten beschränkt ist.

3. Verfahren nach einem der vorhergehenden Ansprüche, das ferner vor dem Schritt des Herunterladens den Schritt des Übermittelns (40) einer Kennung der Zielvorrichtung zum Server umfasst.

4. Verfahren nach einem der vorhergehenden Ansprüche, wobei der Schritt des Bestimmens (46) eines zu übertragenden Firmwareabschnitts auf einem Abschnittsindikator basiert, der über den drahtlosen Kurzbereichslink von der Zielvorrichtung (2) empfangen wird.

5. Verfahren nach Anspruch 4, wobei der Abschnittsindikator einen zu übertragenden Firmwareabschnitt spezifiziert.

6. Verfahren nach Anspruch 5, wobei der Abschnittsindikator eine Firmwareversion spezifiziert.

7. Verfahren nach einem der vorhergehenden Ansprüche, wobei der tragbare Aktualisierer (1) ein Smartphone ist.

8. Verfahren nach einem der vorhergehenden Ansprüche, wobei der drahtlose Kurzbereichslink auf Bluetooth oder Bluetooth Low Energy basiert.

9. Verfahren nach einem der vorhergehenden Ansprüche, wobei die Zielvorrichtung ein elektronisches Schloss ist.

10. Tragbarer Aktualisierer (1) zum Ermöglichen des Aktualisierens einer Firmware einer Zielvorrichtung (2), wobei der tragbare Aktualisierer (1) Folgendes umfasst:
einen Prozessor (60) und
einen Speicher (64), in dem Anweisungen (67) gespeichert sind, die, wenn sie vom Prozessor ausgeführt werden, den tragbaren Aktualisierer (1) zu Folgendem veranlassen:
Herunterladen einer Vielzahl von Firmwareabschnitten (10a-h) von einem Server (3), wobei die Firmwareabschnitte (10a-n) zusammen eine vollständige Firmware (11) zum Einsatz auf der Zielvorrichtung (2) darstellen;
Bestimmen, dass eine Verbindung mit der Zielvorrichtung (2) über einen drahtlosen Kurzbereichslink aufgebaut ist;
Bestimmen eines Firmwareabschnitts zum Übertragen zur Zielvorrichtung (2);
Übertragen des bestimmten Firmwareabschnitts über den drahtlosen Kurzbereichslink zur Zielvorrichtung (2) und
**dadurch gekennzeichnet, dass** der tragbare Aktualisierer ferner Anweisungen (67) umfasst, die, wenn sie vom Prozessor ausgeführt werden, den tragbaren Aktualisierer (1) veranlassen, die Anweisungen zu wiederholen, um einen Firmwareabschnitt zu bestimmen und zu übertragen, bis eine vorbestimmte Anzahl von Firmwareabschnitten, bei denen es sich um einen strikten Untersatz von allen Firmwareabschnitten handelt, übertragen wurden
wobei der tragbare Aktualisierer ferner Anweisungen (67) umfasst, die, wenn sie vom Prozessor ausgeführt werden, den tragbaren Aktualisierer (1) veranlassen, die Verbindung mit der Zielvorrichtung zu trennen, nachdem der strikte Untersatz von allen Firmwareabschnitten übertragen wurden.

11. Tragbarer Aktualisierer (1) nach Anspruch 10, wobei die Verbindung mit der Zielvorrichtung (2) auf das Übertragen nur des strikten Untersatzes von allen Firmwareabschnitten beschränkt ist.

12. Tragbarer Aktualisierer (1) nach einem der Ansprüche 10 bis 11, wobei der tragbare Aktualisierer (1) ein Smartphone ist.

13. Computerprogramm (67, 91) zum Ermöglichen des Aktualisierens einer Firmware einer Zielvorrichtung (2), wobei das Computerprogramm Computerprogrammcode umfasst, der, wenn er auf einem tragbaren Aktualisierer (1) ausgeführt wird, den tragbaren Aktualisierer (1) zu Folgendem veranlasst:
Herunterladen einer Vielzahl von Firmwareabschnitten (10a-h) von einem Server (3), wobei die Firmwareabschnitte (10a-n) zusammen eine vollständige Firmware (11) zum Einsatz auf der Zielvorrichtung (2) darstellen;
Bestimmen, dass eine Verbindung mit der Zielvorrichtung (2) über einen drahtlosen Kurzbereichslink aufgebaut ist;
Bestimmen eines Firmwareabschnitts zum Übertragen zur Zielvorrichtung (2) und
Übertragen des bestimmten Firmwareabschnitts über den drahtlosen Kurzbereichslink zur Zielvorrichtung (2);
**dadurch gekennzeichnet, dass** das Computerprogramm ferner Computerprogrammcode umfasst, der, wenn er auf einem tragbaren Aktualisierer (1) ausgeführt wird, den tragbaren Aktualisierer (1) veranlasst, den Computerprogrammcode zu wiederholen, um einen Firmwareabschnitt zu bestimmen und zu übertragen, bis eine vorbestimmte Anzahl von Firmwareabschnitten, bei denen es sich um einen strikten Untersatz von allen Firmwareabschnitten handelt, übertragen wurden; und
wobei das Computerprogramm ferner Computerprogrammcode umfasst, der, wenn er auf einem tragbaren Aktualisierer (1) ausgeführt wird, den tragbaren Aktualisierer (1) veranlasst, die Verbindung mit der Zielvorrichtung zu trennen, nachdem der strikte Untersatz von allen Firmwareabschnitten übertragen wurden.

14. Computerprogrammprodukt (64, 90), das ein Computerprogramm nach Anspruch 13 und ein computerlesbares Mittel, auf dem das Computerprogramm gespeichert ist, umfasst.

## Revendications

1. Procédé d'activation de mise à niveau de micrologiciel d'un dispositif cible (2), le procédé étant réalisé dans un actualisateur portable (1) et comprenant les étapes suivantes :
le téléchargement (42) d'une pluralité de sections de micrologiciel (10a-h) depuis un serveur (3), les sections de micrologiciel (10a-n) constituant collectivement un micrologiciel complet (11) à déployer sur le dispositif cible (2) ;
la détermination (44) qu'une connexion au dispositif cible (2) est établie sur une liaison sans fil de courte portée ;
la détermination (46) d'une section de micrologiciel à transférer au dispositif cible (2) ; et
le transfert (48) de la section de micrologiciel déterminée au dispositif cible (2) sur la liaison sans fil de courte portée ;
**caractérisé en ce que** les étapes de la détermination (46) d'une section de micrologiciel et du transfert (48) sont répétées jusqu'à ce qu'un nombre prédéterminé de sections de micrologiciel, étant un sous-ensemble strict de toutes les sections de micrologiciel, aient été transférées ;
dans lequel le procédé comprend en outre la rupture de la connexion au dispositif cible après que le sous-ensemble strict de toutes les sections de micrologiciel ont été transférées.

2. Procédé selon la revendication 1, dans lequel la connexion au dispositif cible (2) est limitée au transfert uniquement du sous-ensemble strict de toutes les sections de micrologiciel.

3. Procédé selon l'une quelconque des revendications précédentes, comprenant en outre l'étape, avant l'étape du téléchargement, de la transmission (40) d'un identifiant du dispositif cible au serveur.

4. Procédé selon l'une quelconque des revendications précédentes, dans lequel l'étape de la détermination (46) d'une section de micrologiciel à transférer est basée sur un indicateur de section reçu depuis le dispositif cible (2) sur la liaison sans fil de courte portée.

5. Procédé selon la revendication 4, dans lequel l'indicateur de section spécifie une section de micrologiciel à transférer.

6. Procédé selon la revendication 5, dans lequel l'indicateur de section spécifie une version de micrologiciel.

7. Procédé selon l'une quelconque des revendications précédentes, dans lequel l'actualisateur portable (1) est un smartphone.

8. Procédé selon l'une quelconque des revendications précédentes, dans lequel la liaison sans fil de courte portée est basée sur Bluetooth ou Bluetooth Low Energy.

9. Procédé selon l'une quelconque des revendications précédentes, dans lequel le dispositif cible est une serrure électronique.

10. Actualisateur portable (1) d'activation de mise à niveau de micrologiciel d'un dispositif cible (2), l'actualisateur portable (1) comprenant :
un processeur (60) ; et
une mémoire (64) stockant des instructions (67) qui, lorsqu'elles sont exécutées par le processeur, amènent l'actualisateur portable (1) à :
télécharger une pluralité de sections de micrologiciel (10a-h) depuis un serveur (3), les sections de micrologiciel (10a-n) constituant collectivement un micrologiciel complet (11) à déployer sur le dispositif cible (2) ;
déterminer qu'une connexion au dispositif cible (2) est établie sur une liaison sans fil de courte portée ;
déterminer une section de micrologiciel à transférer au dispositif cible (2) ;
transférer la section de micrologiciel déterminée au dispositif cible (2) sur la liaison sans fil de courte portée ; et
**caractérisé en ce que** l'actualisateur portable comprend en outre des instructions (67) qui, lorsqu'elles sont exécutées par le processeur, amènent l'actualisateur portable (1) à répéter les instructions pour déterminer une section de micrologiciel et transférer jusqu'à ce qu'un nombre prédéterminé de sections de micrologiciel, étant un sous-ensemble strict de toutes les sections de micrologiciel, aient été transférées ;
dans lequel l'actualisateur portable comprend en outre des instructions (67) qui, lorsqu'elles sont exécutées par le processeur, amènent l'actualisateur portable (1) à rompre la connexion au dispositif cible après que le sous-ensemble strict de toutes les sections de micrologiciel ont été transférées.

11. Actualisateur portable (1) selon la revendication 10, dans lequel la connexion au dispositif cible (2) est limitée au transfert uniquement du sous-ensemble strict de toutes les sections de micrologiciel.

12. Actualisateur portable (1) selon la revendication 10 ou 11, dans lequel l'actualisateur portable (1) est un smartphone.

13. Programme informatique (67, 91) d'activation de mise à niveau de micrologiciel d'un dispositif cible (2), le programme informatique comprenant un code de programme informatique qui, lorsqu'il est exécuté sur un actualisateur portable (1), amène l'actualisateur portable (1) à :
télécharger une pluralité de sections de micrologiciel (10a-h) depuis un serveur (3), les sections de micrologiciel (10a-n) constituant collectivement un micrologiciel complet (11) à déployer sur le dispositif cible (2) ;
déterminer qu'une connexion au dispositif cible (2) est établie sur une liaison sans fil de courte portée ;
déterminer une section de micrologiciel à transférer au dispositif cible (2) ; et
transférer la section de micrologiciel déterminée au dispositif cible (2) sur la liaison sans fil de courte portée ;
**caractérisé en ce que** le programme informatique comprend en outre un code de programme informatique qui, lorsqu'il est exécuté sur un actualisateur portable (1), amène l'actualisateur portable (1) à répéter le code de programme informatique pour déterminer une section de micrologiciel et transférer jusqu'à ce qu'un nombre prédéterminé de sections de micrologiciel, étant un sous-ensemble strict de toutes les sections de micrologiciel, aient été transférées ;
et
dans lequel le programme informatique comprend en outre un code de programme informatique qui, lorsqu'il est exécuté sur un actualisateur portable (1), amène l'actualisateur portable (1) à rompre la connexion au dispositif cible après que le sous-ensemble strict de toutes les sections de micrologiciel ont été transférées.

14. Produit programme informatique (64, 90) comprenant un programme informatique selon la revendication 13 et un moyen lisible par ordinateur sur lequel le programme informatique est stocké.
